# EUROPÄISCHE PATENTSCHRIFT

(11) **EP 0 406 718 B1**
(45) Veröffentlichungstag und Bekanntmachung des Hinweises auf die Patenterteilung: **19.01.1994**
(21) Anmeldenummer: 90112435.4
(22) Anmeldetag: 29.06.1990
(51) Int. Cl.: B60R 16/02

(54) **Kommunikationsverfahren für einen Einleitungs-Datenbus von Kraftfahrzeugen**
Communication method for a single wire data bus for a motor vehicle
Méthode de communication pour un bus de données monofil dans un véhicule automobile

(30) Priorität: 01.07.1989 DE 3921744
(43) Veröffentlichungstag der Anmeldung: 09.01.1991
(73) Patentinhaber: Bayerische Motoren Werke Aktiengesellschaft, 80788 München (DE)
(72) Erfinder: Rüger, Bernhard, D-8000 München 45 (DE)

(56) Entgegenhaltungen:
- EP-A- 0 117 832
- EP-A- 0 273 526
- IEE PROCEEDINGS E. COMPUTERS & DIGITAL TECHNIQUES. vol.133, no. 6, November 1986, STEVENAGE GB Seiten 312 - 318; D.J.PARISH et al.:"Advanced automotive multiplexed wiring system"

## Beschreibung

Die Erfindung bezieht sich auf ein Kommunikationsverfahren nach dem Oberbegriff des Patentanspruchs 1.

Bei einem derartigen, aus der EP 277302 A bekannten Verfahren liefern die Peripherieeinheiten in einem Zeitfenster im Anschluß an den für ihre Adressierung erforderlichen Spannungsimpuls ein Stromsignal, das es lediglich ermöglicht, den Schaltzustand des Sensors bzw. eines diesem zugeordneten Schalters festzustellen. Der Strom besitzt im einen Fall, beispielsweise wenn der Sensor bzw. der Schalter eingeschaltet ist, einen hohen Wert, im anderen Fall einen niedrigeren Wert. Eine weitere Information ist damit nicht verbunden.

Hinzu kommt bei dem bekannten Verfahren die Schwierigkeit, daß sich die verschiedenen Peripherieeinheiten in ihrem Stromsignal nicht unterscheiden lassen. Es kann der Fall auftreten, daß eine Peripherieeinheit sich nicht an ihre Sendeberechtigung hält, sondern jedesmal, wenn ein Spannungsimpuls von der Zentrale abgegeben wird, ein Stromsignal auf den Datenbus gibt. Handelt es sich dabei um das Stromsignal mit der höheren Stromstärke, so besitzen sämtliche Peripherieeinheiten für die Zentrale scheinbar denselben Zustand. Alle übrigen Peripherieeinheiten werden durch die fehlerhafte Peripherieeinheit "überstimmt". Die Folge davon ist ein völliger Ausfall der Kommunikation auf dem Datenbus, da dieser durch die fehlerhafte Peripherieeinheit völlig lahmgelegt wird.

Der Erfindung liegt die Aufgabe zugrunde, ein Kommunikationsverfahren der eingangs genannten Art zu schaffen, das sich durch hohe Betriebssicherheit und große Flexibilität auszeichnet.

Die Erfindung löst diese Aufgabe durch die Merkmale des Patentanspruchs 1.

Da jede Peripherieeinheit im Sendebetrieb ihre Adresse abgibt, ist es für die Zentrale ohne weiteres möglich, die jeweils sendende Peripherieeinheit zu identifizieren. Genauso ist es auch möglich, eine fehlerhafte Peripherieeinheit zu erkennen, da die Adresse der fehlerhaft sendenden Peripherieeinheit nicht mit der Adresse der berechtigt sendenden Peripherieeinheit übereinstimmt.

Im Gegensatz zum bekannten Verfahren, bei dem die beiden Bezugsspannungen unterschiedliche Höhe aufweisen, ergibt sich durch die Konstanz dieser Spannung ein hohes Maß an Störsicherheit, da zufällige und ungewollte Veränderungen der Bezugsspannung keinen Einfluß auf die Datenkommunikation haben. Da ein Umschalten zwischen verschiedenen Bezugsspannungen entfällt, ergeben sich auch deutliche Vereinfachung im Hinblick auf die Anforderungen bezüglich Synchronisation. Durch den Entfall des Umschaltens zwischen verschiedenen Bezugsspannungen wird es auch möglich, die Abfragegeschwindigkeit für die Peripherieeinheiten durch die Zentrale variabel zu gestalten. Dies ermöglicht es beispielsweise im Notfall, d.h. wenn einer der Sensoren einen kritischen Wert feststellt und dies, wie weiter unten im Detail beschrieben, der Zentrale mitteilt, die kritischen Peripherieeinheiten schnell und mit verkürztem bzw. völlig eliminiertem Antwortzyklus abzufragen.

Im Gegensatz zum bekannten Verfahren, bei der lediglich eine Schwarz-Weiß-Information über den Sensor ausgegeben wird, ist es nunmehr möglich, auch eine wertemäßige Information über den Sensor bzw. des mit diesem festgestellten Meßwertes an die Zentrale zu übermitteln. Dies geschieht mit der variablen Einstellung der Strominformation entsprechend dem Wert. Damit eröffnet sich ein weites Anwendungsfeld der Erfindung. Sie kann in sämtlichen Geräten, Schaltern, Sensoren und Aktuatoren des Kraftfahrzeugs eingesetzt werden.

Beim bekannten Kommunikationsverfahren ist auch die Möglichkeit vorgesehen, eine Zustandsinformation durch die Peripherieeinheiten im Sendebetrieb abzugeben. Dies geschieht durch eine Einstellung eine Strominformation durch die Peripherieeinheiten während der Aufnahme des Abfrage-Spannungsimpulses. Auch hier ergeben sich Synchronisierungsprobleme, da die Zustandsinformation bereits ausgegeben wird, während die Sendeberechtigung durch den Spannungsimpuls erteilt wird. Demgegenüber ergibt sich eine deutliche Vereinfachung des schaltungstechnischen Aufbaus, wenn die Zustandsinformation in Form eines codierten Stromsignals als Bitwert im Anschluß an den Spannungsimpuls ausgegeben wird. Anstelle des Bitwertes kann auch ein breiten- oder amplitudenmodulierter Stromimpuls ausgegeben werden.

Wie bereits angedeutet, ermöglicht es die einheitliche Bezugsspannung, im Bedarfsfall durch die Peripherieeinheiten ein zusätzliches, in der Qualität unterschiedliches Stromsignal unabhängig von ihrer Sendeberechtigung abgeben zu lassen. Dieses Stromsignal kann sich in der Stromstärke unterscheiden oder eine Impulsbreite besitzen, die deutlich größer als die maximale Breite der anderen Stromimpulse ist. Die Zentrale kann dann gezielt auf die kritische(n) Peripherieeinheit(en) zugreifen oder die Abfragefrequenz erhöhen und auf diese Weise die kritische Peripherieeinheit identifizieren. Anschließend daran können die vorgesehenen Notfallmaßnahmen, beispielsweise das Ausschalten kritischer Verbraucher, durchgeführt werden.

Die Strominformation, die den Wertebereich des Sensors wiedergibt, kann auf unterschiedliche Weise gestaltet sein. Möglichkeiten hierzu finden sich in den Patentansprüchen 7 bis 9. Sie können je nach Aufbau und Struktur des Datenbusses bzw. je nach Anwendungsfall gewählt werden.

Die Ausführungsform nach Patentanspruch 7 bietet den Vorteil, lediglich mit einem Analog-Digital-Wandler in der Zentrale die Werte der einzelnen Sensoren festzustellen.

Die Ausführungsform nach Patentanspruch 8 und nach Patentanspruch 9 bieten den Vorteil, in der Zentrale ohne weiteres eine digitale Information über den jeweiligen Wert zur Verfügung zu haben.

In der Zeichnung ist ein Ausführungsbeispiel der Erfindung dargestellt.

Es zeigt
- Fig. 1: eine Schaltungsanordnung für einen Einleitungs-Datenbus von Kraftfahrzeugen in Ausschnitten, mit dem ein bidirektionaler Datenverkehr vorgenommen wird,
- Fig. 2: Beispiele von Datentelegrammen, die von einer Peripherieeinheit an die Zentrale ausgesandt werden und
- Fig. 3: ein Spannungs-/Stromdiagramm für den Datenverkehr auf dem Datenbus
- Fig. 4: den Datenverkehr analog Fig. 3 im Fehlerfalle.

Der ausschnittsweise gezeigte Einleitungs-Datenbus 41, der vorzugsweise in einem Kraftfahrzeug eingesetzt ist, dient dazu, eine Zentrale 42 mit verschiedenen Peripherieeinheiten 43, 44 zu verbinden. Die Zentrale 42 sendet dabei über einen Treiber 45 Spannungsimpulse auf den Datenbus 41, die von den Peripherieeinheiten 43, 44,..... empfangen werden und mit denen die unterschiedlichen Befehle veranlaßt werden. Hierzu gehört beispielsweise die Adressierung der Verbraucher mit Hilfe von Spannungsimpulsen relativ kurzer erster Zeitdauer, beispielsweise von 40 µsec, mit denen die Verbraucher sequentiell aktiviert werden.

Mit dem Aktivieren verbunden ist für jede Peripherieeinheit die Zuteilung der Sendeberechtigung. Im Bedarfsfall kann dann die jeweilige Peripherieeinheit eine Information auf den Datenbus 41 ausgeben, die von der Zentrale 42 aufgenommen werden kann. Diese Information liegt stromcodiert vor. Sowohl die von der Zentrale 42 ausgesandten Impulse als auch die von den Peripherieeinheiten ausgegebenen Strominformationen sind auf dasselbe Bezugspotential bezogen.

Sofern eine Peripherieeinheit angesprochen ist - das durch die von der Zentrale 42 ausgesandten Spannungsimpulse gegebene Befehlstelegramm wird in den Peripherieeinheiten mit Hilfe von Komparatoren 46 aufgenommen und mit einem Adresszähler und -vergleicher (nicht dargestellt) erfaßt -, liefert die jeweilige Peripherieeinheit ein Rückmeldetelegramm in Form einer codierten Strominformation.

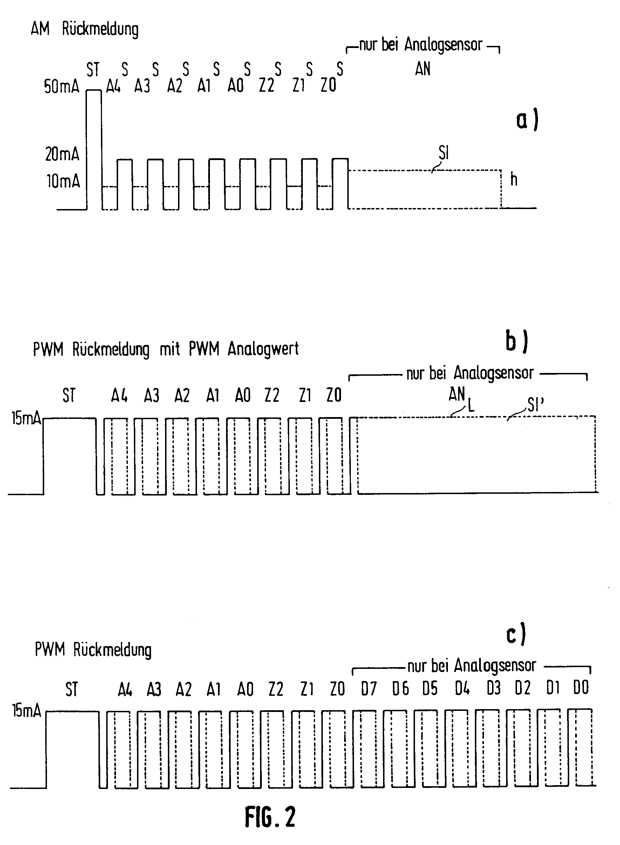

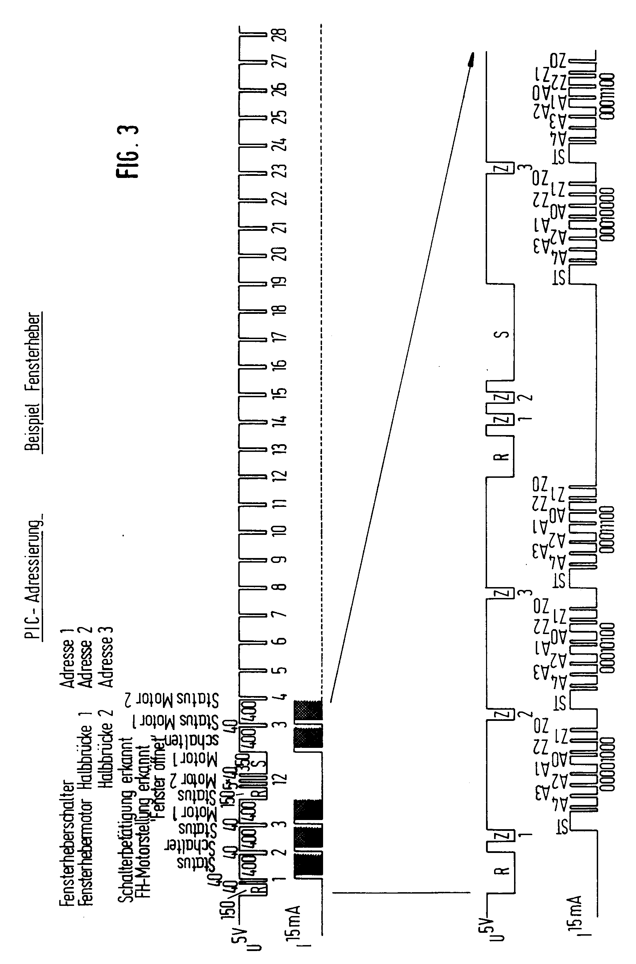

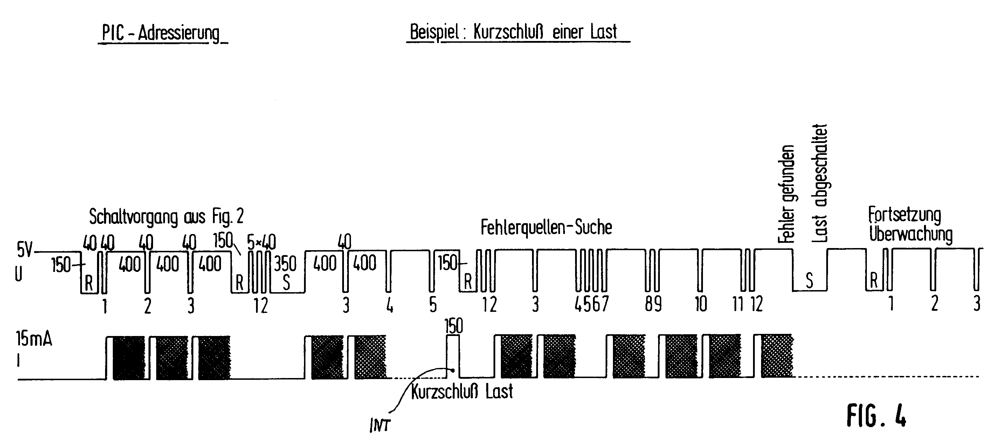

Dabei kann es sich, wie in Fig. 2 im einzelnen dargestellt, um einen Stromimpuls SI vorgegebener Dauer und entsprechend dem Wert eines angeschlossenen Sensors variabler Stärke h (Fig. 2a), oder um einen Stromimpuls SI′ vorgegebener Stärke und variabler Länge L (Fig. 2b) oder aber um einen Digitalwert (Fig. 2c) mit der Bits D0 bis D7 handeln. Letzteres setzt im Falle eines Analog-Sensors einen A/D-Wandler in der Peripherieeinheit voraus. Der Digitalwert wird erzeugt, indem ein Widerstand 47 in der jeweiligen Peripherieeinheit entsprechend auf Massepotential gelegt wird.

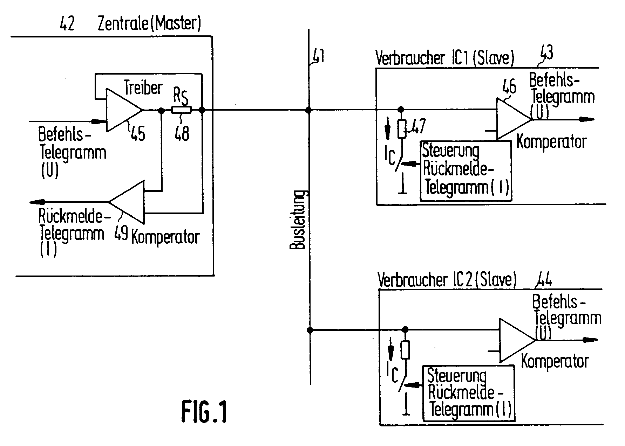

Der Treiber 45 (Fig. 1) sorgt dafür, daß unabhängig vom Schaltzustand des Widerstands 47 das Bezugspotential während der Sendeberechtigung der Peripherieeinheit konstant ist. Die sich ergebende Strominformation wird mit einem Widerstand 48 in der Zentrale 42 gemessen und über einen Komparator 49 in weitere, nicht dargestellte Bauteile der Zentrale 42 eingelesen. Damit wird es möglich, im Falle eines Sensors als Peripherieeinheit den mit dem Sensor bestimmten Wert an die Zentrale 42 zurückzumelden und dort entsprechend weiterzuverarbeiten.

Die Übertragungsart zwischen Zentrale und Peripherieeinheiten bzw. zwischen den Peripherieeinheiten und der Zentrale ist informationsrichtungsunterschiedlich. Im ersteren Fall ist sie als Spannungssignal und im zweiten Fall als Stromsignal gegeben.

Es ist ohne weiteres zu erkennen, daß in der Peripherieeinheit 43 bzw. 44 nur ein geringer schaltungstechnischer Aufwand erforderlich ist. Dies gilt auch für die Zentrale 42. Damit verringern sich die Systemkosten gegenüber bekannten Einrichtungen deutlich. Die Rückinformation von den Peripherieeinheiten zur Zentrale kann von keiner anderen Peripherieeinheit verstanden werden. Damit ist eine gegenseitige Beeinflussung der verschiedenen Peripherieeinheiten nicht möglich. Durch die niederohmige Busankopplung ergibt sich eine hohe Störsicherheit.

Das in Fig. 3 gezeigte Diagramm zeigt im oberen Teil die sequentielle Adressierung von bis zu 31 Peripherieeinheiten durch die Zentrale 42 mit Hilfe von aufeinanderfolgenden Spannungsimpulsen 1,2,3.... bis 31 erster Zeitdauer und im unteren Teil den Anfang des Diagramms gezoomt.

Die Spannungsimpulse besitzen eine relativ kurze Zeitdauer von 40 µsec und dienen dazu, nach einem vorbereiteten Reset-Impuls R einer Zeitdauer von hier 150 µsec die Adresszähler der verschiedenen Peripherieeinheiten der Reihe nach auf den Wert 0 zu zählen. Die jeweilige Peripherieeinheit besitzt dann die Sendeberechtigung für eine zweite, längere Zeitdauer von hier 400 bzw. 800 µsec. Während der ersten 400 µsec senden die jeweils angesprochenen Peripherieeinheiten ein digitales Stromsignal A0......A4 als Adresskennung und eine Zustandsinformation Z0......Z2 sowie während der folgenden 400 usec eine der in Fig. 2 dargestellte und bereits beschriebene codierten Strominformationen aus, sofern in der Peripherieeinheit ein Analogsensor vorhanden ist. Der Übersichtlichkeit halber ist diese Strominformation in Fig. 3 nicht mehr dargestellt.

Ebenfalls in Fig. 3 dargestellt ist ein Fall, bei dem es erforderlich ist, schneller als im Rahmen des üblichen Abfragezyklus eine Kommunikationsverbindung zwischen der Zentrale und einer Peripherieeinheit herzustellen. Hierzu ist die Peripherieeinheit beispielsweise ein Schalter für einen elektrischen Fensterheber, der durch den Zählimpuls 2 gesteuert wird. Während des ersten Abfragezyklus soll es noch nicht erforderlich sein, diesen Schalter zu betätigen und damit den Motor ein- bzw. auszuschalten. Dieses Erfordernis soll erst auftreten, wenn bzw. während die Adresse 3 abgefragt wird.

In diesem Fall ist es möglich, durch einen erneuten Reset-Impuls R den Abfragezyklus erneut zu starten und aufeinanderfolgend die Zählimpulse für die jeweils benötigte Adresse auszusenden, ohne die Rückmeldung der Peripherieeinheiten abzuwarten. Im vorliegenden Fall werden die ersten beiden Zählimpulse ausgesandt. Die Betätigung des Schalters wird durch einen Schaltimpuls S, hier von 350 msec, ausgelöst. Anschließend daran wird erneut der Abfragezyklus gestartet bzw. wie dargestellt das Antworttelegramm von 400 msec. der Adresse 2 abgewartet und der Abfragezyklus mit der nächsten Adresse, hier der Adresse 3 fortgesetzt. Das Antworttelegramm der Adresse 2 besteht, wie im einzelnen dargestellt, aus der Adresskennung und der Zustandsinformation. Aus letzterer ergibt sich, ob der Schaltbefehl tatsächlich durchgeführt wurde.

Ein weiterer Fall, bei dem der übliche Abfragezyklus unterbrochen werden muß und rasch eine Kommunikationsverbindung zwischen der Zentrale und einer Peripherieeinheit hergestellt werden muß, ist in Fig. 4 gezeigt. Dabei soll eine der Peripherieeinheiten einen kritischen Zustand, hier einen Last-Kurzschluß aufweisen. Ausgehend von dem Schaltvorgang, wie er in Fig. 3 dargestellt ist, tritt der Last-Kurzschluß in einer Peripherieeinheit auf, die der Zentrale nicht bekannt ist. Die Zentrale erkennt lediglich den Fehlerfall durch ein Interrupt-Signal INT, hier von 150 µsec Dauer, das von einer Peripherieeinheit auf den Datenbus gegeben wird. Die Dauer des Interrupt-Impulses ist länger als die maximale Dauer der von den Peripherieeinheiten abgegebenen Stromimpulse und ist zudem für die Zentrale dadurch zu erkennen, daß er außerplanmäßig auftritt.

In diesem Fall unterbricht die Zentrale sofort den Abfragezyklus, setzt einen Reset-Impuls R und beginnt damit den Abfragezyklus. Dabei werden gezielt die Peripherieeinheiten abgefragt, in denen ein derartiger Fehlerfall auftreten kann. Es handelt sich hier beispielsweise um die Adressen 2 und 3, bei denen es sich im angenommenen Fall um Antriebsmotore für einen Fensterheber handelt. Die Peripherieeinheiten, in denen ein derartiger Fehlerfall nicht auftreten kann, werden übergangen. Es wird ihre Antwort nicht abgewartet. Es handelt sich hier um die Adressen 4 bis 6 sowie 8 und 11.

Die weiteren möglichen Adressen 7, 9, 10 und 12 hingegen werden abgefragt. Dabei ist die Zustandsinformation von besonderer Bedeutung, da diese Auskunft über den Ein- und Ausschaltzustand bzw. das Vorliegen eines Kurzschlusses gibt.

Beim angenommenen Beispiel liegt der Fehler bei der Adresse 12. Diese wird geschaltet, d.h. es wird ein Schaltimpuls S von der Zentrale abgegeben und in der Adresse 12 aufgenommen. Dadurch wird die Last abgeschaltet. Die anschließende Antwort der Adresse 12 - Adresse und Zustand - zeigt nunmehr, daß der Fehler beseitigt ist. Der Abfragezyklus wird erneut durch einen Reset-Impuls gestartet.

Anstelle der sequentiellen Ansteuerung der Peripherieeinheiten ist es auch möglich, durch entsprechende digitale Datentelegramme die Peripherieeinheiten individuell anzusprechen.

Damit steht ein Kommunikationsverfahren zur Verfügung, das sich durch höchste Störsicherheit, kostengünstigen Aufbau und hohe Flexibilität auszeichnet.

Durch die Wahl der Bezugsspannung für die von jeder Peripherieeinheit abgegebenen Strominformation gleich der Bezugsspannung für die von der Zentrale an die Peripherieeinheiten ausgegebenen Spannungsimpulse wird es möglich, unabhängig von dem jeweiligen Rückmeldevorgang der Peripherieeinheiten die einzelnen Peripherieeinheiten durch Abgabe von entsprechenden Spannungsimpulsen abzuschalten, indem durch Abgabe eines Zählimpulses auf die nächste Peripherieeinheit umgeschaltet wird. Ebenso ist es möglich, die Peripherieeinheiten schnell und ohne auf den Ablauf Ihres Rückmeldezyklus der Reihe nach abzufragen bzw. auch gezielt anzufahren, in dem für die interessierende Peripherieeinheit die entsprechende Anzahl von Spannungsimpulsen von der Zentrale ausgegeben wird. Damit ist es möglich, einen bidirektionalen Datenverkehr auf den Datenbus durchzuführen unter Beibehalten der Priorität der Zentrale gegenüber den Peripherieeinheiten.

## Patentansprüche

1. Kommunikationsverfahren für einen Einleitungs-Datenbus (41) von Kraftfahrzeugen mit einer Zentrale (42) und mit Sensoren enthaltenden Peripherieeinheiten (43, 44), bei denen die Zentrale die Peripherieeinheiten durch Spannungsimpulse sequentiell anspricht und die Peripherieeinheiten dann ein Stromsignal auf den Datenbus geben, dadurch gekennzeichnet, daß die eine relativ kurze erste Zeitdauer besitzenden Spannungsimpulse (Z; 1, 2, ..., 31) auf eine Bezugsspannung (5V) bezogen werden, und daß die jeweilige aktivierte Peripherieeinheit (43,44) für eine zweite, längere Zeitdauer eine Sendeberechtigung erhält, in der sie ein digitales Stromsignal als Adresskennung (A4, A3, ..., A0), eine Zustandsinformation (Z2, Z1, Z0) und, für den Fall, daß die Peripherieeinheit einen Sensor umfaßt, eine codierte Strominformation SI; SI'; D7, D6, ..., D0) entsprechend einem mit dem Sensor bestimmten Wert auf den Datenbus (41) aufschaltet, wobei mittels eines Treibers (45) die Bezugsspannung (5V) auf dem Datenbus (41) während der Sendeberechtigung der Peripherieeinheit (43, 44) konstant gehalten wird.

2. Kommunikationsverfahren nach Anspruch 1, dadurch gekennzeichnet, daß der Treiber (45) in der Zentrale (42) angeordnet ist.

3. Kommunikationsverfahren nach Anspruch 1 oder 2, dadurch gekennzeichnet, daß die Zustandsinformation als Bitwert ausgegeben wird.

4. Kommunikationsverfahren nach einem der Ansprüche 1 bis 3, dadurch gekennzeichnet, daß die Peripherieeinheiten bei kritischen Zuständen ein zusätzliches, unterschiedliches Stromsignal (INT) unabhängig von ihrem Sendebetrieb abgeben.

5. Kommunikationsverfahren nach Anspruch 4, dadurch gekennzeichnet, daß das unterschiedliche Stromsignal (INT) eine Impulsbreite besitzt, die deutlich größer als die maximale Breite der anderen Stromimpulssignale ist.

6. Kommunikationsverfahren nach einem der Ansprüche 4 oder 5, dadurch gekennzeichnet, daß die Zentrale nach Eingang des unterschiedlichen Stromsignals (INT) schneller auf alle oder gezielt auf definierte Peripherieeinheiten zugreift.

7. Kommunikationsverfahren nach einem der Ansprüche 1 bis 6, dadurch gekennzeichnet, daß die codierte Strominformation ein Stromimpulssignal ist, das bei vorgegebener Länge und konstanter Spannung einen Strom mit entsprechend dem Wert des Sensors variabler Stärke besitzt.

8. Kommunikationsverfahren nach einem der Ansprüche 1 bis 6, dadurch gekennzeichnet, daß die Strominformation ein Stromimpulssignal ist, das bei konstanter Spannung und konstanter Stromstärke eine entsprechend dem Wert des Sensors variable Impulsbreite besitzt.

9. Kommunikationsverfahren nach einem der Ansprüche 1 bis 6, dadurch gekennzeichnet, daß die Strominformation ein Stromimpulssignal ist, das einen den Wert des Sensors entsprechenden digital codierten Impulswert besitzt.

## Claims

1. A method of communication using a single-wire data bus (41) in motor vehicles, comprising an exchange (42) and peripheral units (43, 44) containing sensors, the exchange sequentially addressing the peripheral units via voltage pulses, whereupon the peripheral units deliver a current signal to the data bus, characterised in that the voltage pulses (Z; 1, 2, ..., 31), which have a relatively short first duration, are related to a reference voltage (5V), and the respective activated peripheral unit (43, 44) receives authorisation to transmit for a second, longer duration, during which it offers a digital address-identifying current signal (A4, A3, ..., A0), a status item (Z2, Z1, Z0) and, if the peripheral unit contains a sensor, a coded current item (SI; SI'; D7, D6, ..., D0) corresponding to a value determined by the sensor, to the data bus (41), and a driver (45) keeps the reference voltage (5V) at the data bus (41) constant while the peripheral unit (43, 44) is authorised to transmit.

2. A method of communication according to claim 1, characterised in that the driver (45) is disposed in the exchange (42).

3. A method of communication according to claim 1 or 2, characterised in that the status item is fed out in the form of a bit value.

4. A method of communication according to any of claims 1 to 3, characterised in that, at critical states, the peripheral units deliver an additional, different current signal (INT) independently of their operation when transmitting.

5. A method of communication according to claim 4, characterised in that the different current signal (INT) has a pulse width considerably greater than the maximum width of the other current pulse signals.

6. A method of communication according to claim 4 or 5, characterised in that the exchange, after receipt of the different current signal (INT), accesses the peripheral units more quickly, either all of them or certain selected ones.

7. A method of communication according to any of claims 1 to 6, characterised in that the coded current item is a current pulse signal which, at a preset length and constant voltage, has a current which varies with the sensor value.

8. A method of communication according to any of claims 1 to 6, characterised in that the current item is a current pulse signal which, at constant voltage and constant current, has a pulse width varying with the sensor value.

9. A method of communication according to any of claims 1 to 6, characterised in that the current item is a current pulse signal having a digital coded pulse value corresponding to the sensor value.

## Revendications

1. Procédé de communication pour un bus de données monofil (41) de véhicules automobiles avec une unité centrale (42) et des unités périphériques (43, 44) comportant des détecteurs, pour lesquels la centrale sollicite séquentiellement les unités périphériques par des impulsions de tension, et les unités périphériques émettent alors un signal de courant sur le bus de données, procédé caractérisé en ce que les impulsions de tension (Z ; 1, 2, ..., 31) qui possèdent une première durée relativement courte sont rapportées à une tension de référence (5V) et en ce que l'unité périphérique (43, 44) chaque fois activée se voit attribuer une autorisation d'émission pour une seconde durée plus longue, pendant laquelle elle émet par le bus de données (41) un signal de courant, numérique, comme reconnaissance d'adresse (A4, A3, ..., A0), une information d'état (Z2, Z1, Z0) et dans le cas où l'unité périphérique comporte un capteur, une information de courant, codée, (SI ; SI' ; D7, D6, ..., D0) correspondant à la valeur détectée par le détecteur, un circuit d'entraînement (45) maintenant constante la tension de fonctionnement (5) sur le bus de données (41) pendant l'autorisation d'émission de l'unité périphérique (43, 44).

2. Procédé de communication selon la revendication 1, caractérisé en ce que le circuit d'entraînement (45) se trouve dans l'unité centrale (42).

3. Procédé de communication selon la revendication 1 ou 2, caractérisé en ce que l'information d'état est émise comme valeur de bit.

4. Procédé de communication selon l'une des revendications 1 à 3, caractérisé en ce que les unités périphériques en etat critique émettent en plus un signal de courant différent (INT) indépendamment de leur mode d'émission.

5. Procédé de communication selon la revendication 4, caractérisé en ce que le signal de courant, différent, (INT) a une largeur d'impulsion qui est significativement supérieure à la largeur maximale des autres signaux impulsionnels de courant.

6. Procédé de communication selon l'une des revendications 4 ou 5, caractérisé en ce qu'après l'arrivée du signal de courant différent (INT), l'unité centrale accède plus rapidement à toutes les unités périphériques ou de manière dirigée sur des unités périphériques précises.

7. Procédé de communication selon l'une des revendications 1 à 6, caractérisé en ce que l'information de courant, codée, est un signal impulsionnel de courant qui, pour une longueur prédéterminée et une tension constante, correspond à un courant d'intensité variable en fonction de la valeur fournie par le capteur.

8. Procédé de communication selon l'une des revendications 1 à 6, caractérisé en ce que l'information de courant est un signal impulsionnel de courant qui, pour une tension constante et une intensité constante du courant, possède une largeur d'impulsion variable en fonction de la valeur fournie par le capteur.

9. Procédé de communication selon l'une des revendications 1 à 6, caractérisé en ce que l'information de courant est un signal impulsionnel de courant ayant une valeur d'impulsion en code numérique, correspondant à la valeur du capteur.
